# EUROPEAN PATENT SPECIFICATION

(11) **EP 4 290 904 B1**
(45) Date of publication and mention of the grant of the patent: **25.12.2024**
(21) Application number: 23176688.2
(22) Date of filing: 01.06.2023
(51) Int. Cl.: H04W 12/033

(54) **ENCRYPTION IN 5G DATA REPOSITORY SERVICE**
VERSCHLÜSSELUNG IN EINEM 5G-DATENSPEICHERDIENST
CHIFFREMENT DANS UN SERVICE DE RÉFÉRENTIEL DE DONNÉES 5G

(30) Priority: 07.06.2022 US 202263349588 P
(43) Date of publication of application: 13.12.2023
(73) Proprietor: Nokia Technologies Oy, 02610 Espoo (FI)
(72) Inventor: MOUROULIS, Ioannis, Athens (GR); LITTLE, Jonathan, Coberley (GB); WIEHE, Ulrich, Bad Hersfeld (DE); KHARE, Saurabh, Bangalore (IN); EKMAN, Jani Petteri, Kangasala (FI)
(74) Representative: Samson & Partner Patentanwälte mbB

(56) References cited:
- WO-A1-2022/071924
- "3rd Generation Partnership Project; Technical Specification Group Core Network and Terminals; 5G System; Unstructured Data Storage Services Stage 3; (Release 17)", no. V17.5.0, 19 March 2022 (2022-03-19), pages 1 - 120, XP052144645, Retrieved from the Internet <URL:https://ftp.3gpp.org/Specs/archive/29_series/29.598/29598-h50.zip 29598-h50.docx> [retrieved on 20220319]
- SA3 LI (PIDS): "LI state transfers in SMF sets", vol. SA WG3, no. eMeeting; 20210519 - 20210521, 6 June 2021 (2021-06-06), XP052023982, Retrieved from the Internet <URL:https://ftp.3gpp.org/3guInternal/3GPP_Ultimate_CRPacks/SP-210302.zip 33127_CR0134_(Rel-17)_s3i210356.docx> [retrieved on 20210606]

## Description

### Technical Field

This disclosure is related to the field of communication systems and, in particular, to next generation networks.

### Background

Next generation networks, such as Fifth Generation (5G), denote the next major phase of mobile telecommunications standards beyond Fourth Generation (4G) standards. In comparison to 4G networks, next generation networks may be enhanced in terms of radio access and network architecture. Next generation networks intend to utilize new regions of the radio spectrum for Radio Access Networks (RANs), such as millimeter wave bands.

5G Core Network Functions (NFs) often process sensitive data that needs to be protected from unauthorized access (e.g., UE identities, such as SUPI, UE authentication data, such as keys, whether a UE is a "Priority user" and has privileged access to the network during overload, etc.). Thus, it is desirable to identify mechanisms or standards for encryption of data that is stored in an NF.

The documents
"3rd Generation Partnership Project; Technical Specification Group Core Network and Terminals; 5G System; Unstructured Data Storage Services Stage 3; (Release 17)", 3GPP TS 29.598, XP052144645,
"LI state transfers in SMF sets",3GPP DRAFT; SP-210302, XP052023982, and
WO 2022/071924 A1
represent relevant prior art.

### Summary

Described herein are enhanced data repository services of a 5G core network. In general, an NF that provides a data repository service to NF service consumers also supports encryption as a service. A data repository NF as described herein is configured to encrypt/decrypt certain data (e.g., sensitive data) in records based on one or more encryption indicators embedded in a meta schema for the records. One technical benefit is the protection of data is specified in the meta schema, and thus the same protection level may be applied across different data repository NFs.

In one embodiment, a data repository NF comprises at least one processor and at least one memory including computer program code. The memory and the computer program code are configured to, with the processor, cause the data repository NF at least to receive a request from an NF service consumer for a service operation regarding storage of a record, and containing meta and/or one or more blocks of the record. The processor further causes the data repository NF to apply encryption to one or more meta tags of the meta and/or to the blocks of the record based on one or more encryption indicators embedded in a meta schema defined for the meta, and store the record with the one or more meta tags and/or the blocks in encrypted format according to the meta schema.

In one embodiment, the processor further causes the data repository NF to receive another request from the same or another NF service consumer for a service operation regarding retrieval of the record having the one or more meta tags and/or the blocks stored in encrypted format, decrypt the one or more meta tags and/or the blocks of the record based on the encryption indicators embedded in the meta schema, and send a response to the NF service consumer with the one or more meta tags and/or the blocks in unencrypted format.

In one embodiment, the processor further causes the data repository NF to receive another request from the same or another NF service consumer for a service operation regarding a search of records having the one or more meta tags stored in encrypted format, perform a comparison of the one or more meta tags stored in encrypted format with a comparison value specified in filter criteria, and send a response to the NF service consumer containing a search result.

In one embodiment, the processor further causes the data repository NF to decrypt the one or more meta tags indicated in the filter criteria, and compare the one or more meta tags in unencrypted format with the comparison value.

In one embodiment, the processor further causes the data repository NF to encrypt the comparison value, and compare the one or more meta tags in encrypted format with the encrypted comparison value.

In one embodiment, the meta schema includes a block encryption indicator of the encryption indicators indicating that the blocks of the record are stored in encrypted format.

In one embodiment, a meta schema data type of the meta schema includes the block encryption indicator.

In one embodiment, the meta schema includes a tag encryption indicator of the encryption indicators indicating that tag values of a meta tag of the record are stored in encrypted format.

In one embodiment, a tag type data type of the meta schema includes the tag encryption indicator.

In one embodiment, the encryption indicators refer to an encryption enumeration that indicates encryption methods for records stored in the data repository NF.

In one embodiment, a supported features data type includes an encryption feature indicator indicating that the data repository NF supports encryption as a service.

In one embodiment, the processor further causes the data repository NF to register an encryption capability in an NF Repository Function (NRF).

In one embodiment, the data repository NF is implemented in an Unstructured Data Storage Function (UDSF).

In one embodiment, the data repository NF is implemented in a Unified Data Repository (UDR).

In one embodiment, the data repository NF is implemented in an Analytics Data Repository Function (ADRF).

In one embodiment, a method of performing a data repository service in a 5G core network is disclosed. The method comprises receiving a request from an NF service consumer for a service operation regarding storage of a record, and containing meta and/or one or more blocks of the record. The method further comprises applying encryption to one or more meta tags of the meta and/or to the blocks of the record based on one or more encryption indicators embedded in a meta schema defined for the meta, and storing the record with the one or more meta tags and/or the blocks in encrypted format according to the meta schema.

In one embodiment, the method further comprises receiving another request from the same or another NF service consumer for a service operation regarding retrieval of the record having the one or more meta tags and/or the blocks stored in encrypted format, decrypting the one or more meta tags and/or the blocks of the record based on the encryption indicators embedded in the meta schema, and sending a response to the NF service consumer with the one or more meta tags and/or the blocks in unencrypted format.

In one embodiment, the method further comprises receiving another request from the same or another NF service consumer for a service operation regarding a search of records having the one or more meta tags stored in encrypted format, performing a comparison of the one or more meta tags stored in encrypted format with a comparison value specified in filter criteria, and sending a response to the NF service consumer containing a search result.

In one embodiment, a data repository NF comprises a means for receiving a request from an NF service consumer for a service operation regarding storage of a record, and containing meta and/or one or more blocks of the record. The data repository NF further comprises a means for applying encryption to one or more meta tags of the meta and/or to the blocks of the record based on one or more encryption indicators embedded in a meta schema defined for the meta. The data repository NF further comprises a means for storing the record with the one or more meta tags and/or the blocks in encrypted format according to the meta schema.

Other embodiments may include computer readable media, other systems, or other methods as described below. The various features of the different embodiments may be variously combined with some features included and others excluded to suit a variety of different applications.

The above summary provides a basic understanding of some aspects of the specification. This summary is not an extensive overview of the specification. It is intended to neither identify key or critical elements of the specification nor delineate any scope of the particular embodiments of the specification, or any scope of the claims. Its sole purpose is to present some concepts of the specification in a simplified form as a prelude to the more detailed description that is presented later.

### Description of the Drawings

Some embodiments of the invention are now described, by way of example only, and with reference to the accompanying drawings. The same reference number represents the same element or the same type of element on all drawings.
FIG. 1 illustrates a high-level architecture of a 5G system.
FIG. 2 illustrates a non-roaming architecture of a 5G system.
FIG. 3 illustrates an NF service consumer and NF service producer interaction.
FIG. 4 illustrates a "Request-response" NF Service mechanism.
FIG. 5 is a block diagram of a data repository NF in an illustrative embodiment.
FIG. 6 is a block diagram of a record for a data repository service.
FIG. 7 is a flow chart illustrating a method of performing a data repository service in an illustrative embodiment.
FIG. 8 is a flow chart illustrating a method of performing a data repository service in an illustrative embodiment.
FIG. 9 is a flow chart illustrating a method of performing a data repository service in an illustrative embodiment.
FIG. 10 illustrates a data storage architecture with a UDSF.
FIG. 11 illustrates a "MetaSchema" data type in an illustrative embodiment.
FIG. 12 illustrates a "TagType" data type in an illustrative embodiment.
FIG. 13 illustrates an encryption enumeration in an illustrative embodiment.
FIG. 14 illustrates a supported features data type in an illustrative embodiment.
FIGS. 15-16 are message diagrams illustrating a UDSF data repository service in illustrative embodiments.
FIG. 17 illustrates a data storage architecture with a UDR.
FIG. 18 illustrates a data storage architecture with an ADRF.

### Description of Embodiments

The figures and the following description illustrate specific exemplary embodiments. It will thus be appreciated that those skilled in the art will be able to devise various arrangements that, although not explicitly described or shown herein, embody the principles of the embodiments and are included within the scope of the embodiments. Furthermore, any examples described herein are intended to aid in understanding the principles of the embodiments, and are to be construed as being without limitation to such specifically recited examples and conditions. As a result, the inventive concept(s) is not limited to the specific embodiments or examples described below, but by the claims.

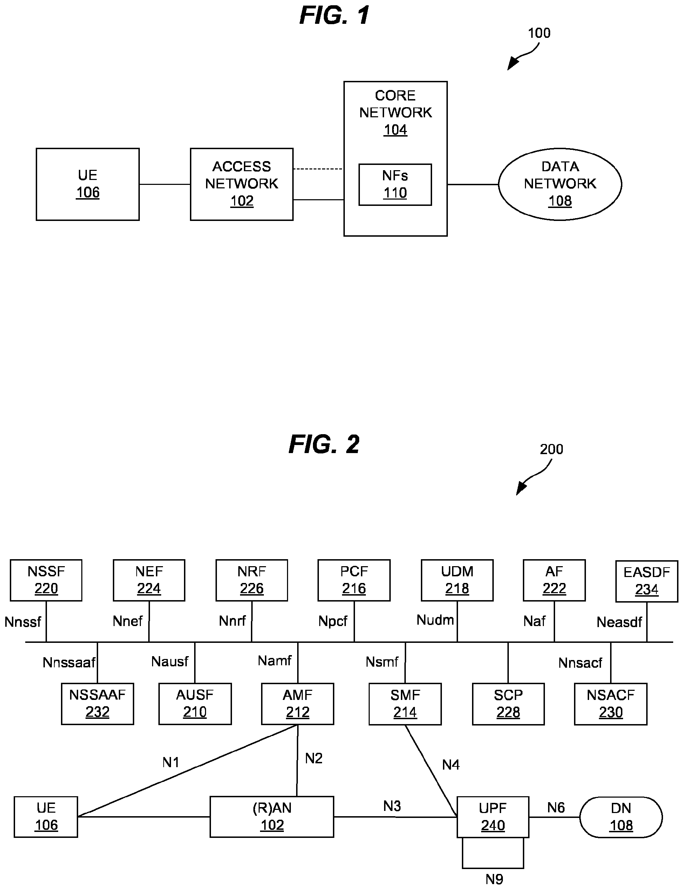

FIG. 1 illustrates a high-level architecture of a 5G system 100. A 5G system 100 is a communication system (e.g., a 3GPP system) comprising a 5G Access Network ((R)AN) 102, a 5G Core Network (CN) 104 (also referred to as 5GC), and 5G User Equipment (UE) 106. Access network 102 may comprise an NG-RAN and/or a non-3GPP access network connecting to a 5G core network 104. Access network 102 may support Evolved-UMTS Terrestrial Radio Access Network (E-UTRAN) access (e.g., through an eNodeB, gNodeB, and/or ng-eNodeB), Wireless Local Area Network (WLAN) access, fixed access, satellite radio access, new Radio Access Technologies (RAT), etc. Core network 104 interconnects access network 102 with a data network (DN) 108. Core network 104 is comprised of Network Functions (NF) 110, which may be implemented either as a network element on dedicated hardware, as a software instance running on dedicated hardware, as a virtualized function instantiated on an appropriate platform (e.g., a cloud infrastructure), etc. Data network 108 may be an operator external public or private data network, or an intra-operator data network (e.g., for IMS services). UE 106 is a 5G capable device configured to register with core network 104 to access services. UE 106 may be an end user device, such as a mobile phone (e.g., smartphone), a tablet or PDA, a computer with a mobile broadband adapter, etc. UE 106 may be enabled for voice services, data services, Machine-to-Machine (M2M) or Machine Type Communications (MTC) services, and/or other services.

FIG. 2 illustrates a non-roaming architecture 200 of a 5G system. The architecture 200 in FIG. 2 is a service-based representation, as is further described in 3GPP TS 23.501 (v17.4 0). Architecture 200 is comprised of Network Functions (NF) for a core network 104, and the NFs for the control plane (CP) are separated from the user plane (UP). The control plane of the core network 104 includes an Authentication Server Function (AUSF) 210, an Access and Mobility Management Function (AMF) 212, a Session Management Function (SMF) 214, a Policy Control Function (PCF) 216, a Unified Data Management (UDM) 218, a Network Slice Selection Function (NSSF) 220, and an Application Function (AF) 222. The control plane of the core network 104 further includes a Network Exposure Function (NEF) 224, a NF Repository Function (NRF) 226, a Service Communication Proxy (SCP) 228, a Network Slice Admission Control Function (NSACF) 230, a Network Slice-specific and SNPN Authentication and Authorization Function (NSSAAF) 232, and an Edge Application Server Discovery Function (EASDF) 234. The user plane of the core network 104 includes one or more User Plane Functions (UPF) 240 that communicate with data network 108. UE 106 is able to access the control plane and the user plane of the core network 104 through (R)AN 102. Other NFs of a 5G system not shown in FIG. 2 include an Unstructured Data Storage Function (UDSF), a Unified Data Repository (UDR), and an Analytics Data Repository Function (ADRF).

Various network functions of 5G system 100 may also be referred to herein as "network elements". A "network element" includes functions, operations, etc., and the underlying hardware or physical devices (e.g., processors) that are programmed to perform the functions.

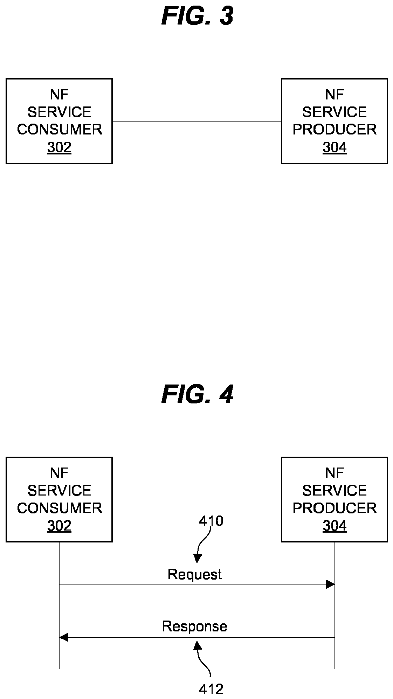

The 5G architecture is based on a Service-Based Architecture (SBA), which is delivered by a set of interconnected Network Functions (NFs), with authorization to access each other's services. The roles of NFs with the 5GC may be defined as a service consumer and a service producer. An NF service producer is an NF that exposes an NF service, and an NF service consumer is an NF that requests an NF service. An NF service may communicate directly between an NF service consumer and an NF service producer through a service-based interface (SBI), as illustrated in FIG. 3. An NF service may also communicate between an NF service consumer and NF service producers indirectly via an SCP 228 (not shown). The end-to-end interaction between two NFs (Consumer and Producer) within the NF service framework follows two mechanisms: "Request-response", and "Subscribe-Notify". FIG. 4 illustrates a "Request-response" NF Service mechanism. An NF service consumer 302 sends a request 410 for a certain NF service to NF service producer 304. NF service producer 304 provides an NF service based on the request 410 from NF service consumer 302. In order to fulfill the request 410, NF service producer 304 may in turn consume NF services from other NFs. In the Request-response mechanism, a one-time response 412 from NF service producer 304 to NF service consumer 302 is expected within a certain timeframe.

Some NF services provided within a 5G architecture are data storage or data repository services.

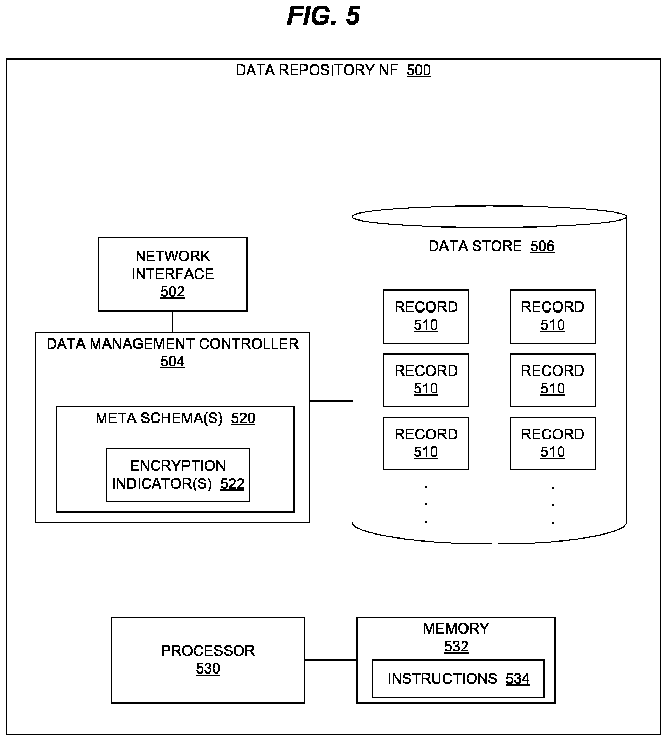

FIG. 5 is a block diagram of a data repository NF 500 in an illustrative embodiment. Data repository NF 500 is a network element or network function (NF) of a 5G core network 104 that is configured to store data as part of a data repository service. Examples of data repository NF 500 include an Unstructured Data Storage Function (UDSF), a Unified Data Repository (UDR), and an Analytics Data Repository Function (ADRF), although other NFs are considered herein that provide a data repository service.

In one embodiment, data repository NF 500 includes the following subsystems: a network interface component 502, a data management controller 504, and a data store 506 that operate on one or more platforms. Network interface component 502 may comprise circuitry, logic, hardware, means, etc., configured to exchange control plane messages or signaling with other network elements or NFs. Network interface component 502 may operate using a variety of protocols or reference points. Data management controller 504 may comprise circuitry, logic, hardware, means, etc., configured to support a data repository service. Data store 506 comprises a data storage mechanism, memory, database, etc., that is configured to store data.

One or more of the subsystems of data repository NF 500 may be implemented on a hardware platform comprised of analog and/or digital circuitry. For example, data management controller 504 may be implemented on one or more processors 530 that execute instructions 534 (i.e., computer readable code) for software that are loaded into memory 532. A processor 530 comprises an integrated hardware circuit configured to execute instructions 534 to provide the functions of data repository NF 500. Processor 530 may comprise a set of one or more processors or may comprise a multi-processor core, depending on the particular implementation. Memory 532 is a non-transitory computer readable storage medium for data, instructions, applications, etc., and is accessible by processor 530. Memory 532 is a hardware storage device capable of storing information on a temporary basis and/or a permanent basis. Memory 532 may comprise a random-access memory, or any other volatile or non-volatile storage device. One or more of the subsystems of data repository NF 500 may be implemented on a cloud-computing platform or another type of processing platform.

Data repository NF 500 may include various other components not specifically illustrated in FIG. 5.

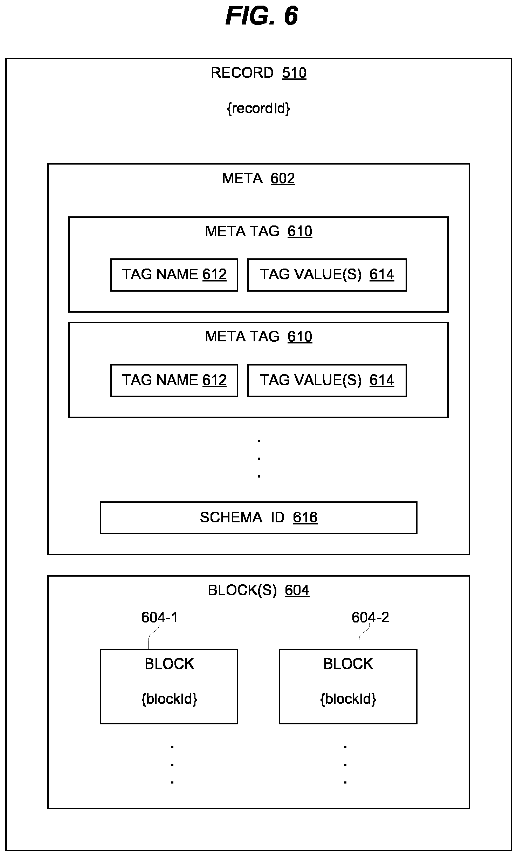

In general, a data repository NF 500 as described herein is configured to store data in records 510. FIG. 6 is a block diagram of a record 510 for a data repository service. Record 510 is identifiable with a record identifier (e.g., recordId). Record 510 includes meta 602 and may include one or more blocks 604 of data. Meta 602 includes one or more meta tags 610, which is a map of tag name/value(s) pairs. A tag name 612 is a unique string name that is the primary key of the map, and is paired with one or more tag values 614 (i.e., an array of string values). Meta 602 also includes a schema ID 616 that indicates a meta schema for the meta 602 (e.g., the meta tags 610). Blocks 604 (e.g., block 604-1 and 604-2) of a record 510 (if present) are identifiable with a block identifier (e.g., blockId).

In FIG. 5, data repository NF 500 stores a meta schema 520 (or multiple meta schemas) for the data repository service. A meta schema 520 indicates or describes the data structure of the meta tags 610 for records 510.

The data repository service may provide for multiple service operations. One service operation is a record collection operation to search for or delete records 510. One service operation is a record operation to retrieve, create, update, or delete a record 510. One service operation is a meta operation to retrieve the meta 602 of a record 510 or modify the meta 602 of a record 510. One service operation is a block collection operation to retrieve all blocks 604 of a record 510. One service operation is a block operation to retrieve, create, update, or delete a block 604. One service operation is a meta schema operation to retrieve, create, update, or delete a meta schema 520. Other service operations, such as subscription operations, are also defined.

For a data repository service, data repository NF 500 acts as an NF service producer 304 for an NF service consumer 302. Thus, an NF service consumer 302 may send a request to data repository NF 500 to store one or more records 510, may send a request to data repository NF 500 to retrieve one or more records 510, etc. At least a portion of a record 510 may comprise sensitive data, which is data that is protected against unauthorized access or unwarranted disclosure. To provide a protection mechanism for the sensitive data, data repository NF 500 implements an encryption service as part of the data repository service. Thus, data repository NF 500 may be configured to encrypt meta tags 610 and/or blocks 604 of a record 510 for storage. In one embodiment, one or more encryption indicators 522 are included or embedded in the meta schema 520. Encryption indicators 522 embedded in the meta schema 520 may indicate which meta tags 610 are to be encrypted as stored by data repository NF 500, whether blocks 604 are to encrypted as stored by data repository NF 500, an encryption method for encryption, etc.

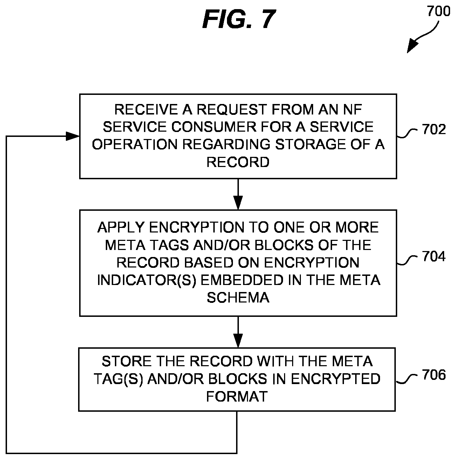

FIG. 7 is a flow chart illustrating a method 700 of performing a data repository service in an illustrative embodiment. The steps of method 700 will be described with reference to data repository NF 500 in FIG. 5, but those skilled in the art will appreciate that method 700 may be performed in other systems, devices, or network functions. The steps of the flow charts described herein are not all inclusive and may include other steps not shown, and the steps may be performed in an alternative order.

In this method, data repository NF 500 acts as an NF service producer 304 for a data repository service where an NF service consumer 302 stores a record 510 at data repository NF 500. Data management controller 504 receives a request from an NF service consumer 302 for a service operation regarding storage of a record 510 (step 702), such as through network interface component 502. The request contains data for the record 510 supplied by the NF service consumer 302, such as meta 602 and/or one or more blocks 604 of the record 510. For example, data management controller 504 may receive a request to create or update a record 510, and the request body contains meta 602 and zero or more blocks 604 of the record 510. In another example, data management controller 504 may receive a request to modify meta 602 of the record 510, and the request body contains meta 602 (e.g., patch items to apply to the record 510). In another example, data management controller 504 may receive a request to create or update a block 604 of the record 510, and the request body contains the block data for the block 604.

Data management controller 504 is configured to encrypt certain data (e.g., sensitive data) in the record 510 based on the meta schema 520 designated for the record 510. It may therefore be assumed that the data to be encrypted by data repository NF 500 is not encrypted by NF service consumer 302. For example, NF service consumer 302 may know based on the meta schema 520 what data will be encrypted at data repository NF 500 as part of the data repository service. Thus, NF service consumer 302 may leave this data in unencrypted format within record 510. Other parts of record 510 (e.g., data that will not be encrypted by data repository NF 500) may be encrypted by the NF service consumer 302.

Data management controller 504 applies encryption to one or more meta tags 610 of the meta 602 and/or to the blocks 604 of the record 510 based on the encryption indicators 522 embedded in the meta schema 520 (step 704). Data management controller 504 then stores the record 510 with the meta tag(s) 610 and/or the blocks 604 in encrypted format according to the meta schema 520 (step 706), such as in data store 506. Data management controller 504 may also send a response to the NF service consumer 302 with a status code for the prior request.

The encryption/protection of data within data repository NF 500 is orthogonal to encryption/protection of data during transmission from one NF to another. The latter is achieved with the existing mechanisms, such as mutual Transport Layer Security (TLS) or mTLS that applies to Service Based Interfaces.

Data repository NF 500 may repeat method 700 for the same or other NF service consumers 302, and apply encryption to selected portions of records 510 based on the meta schema 520.

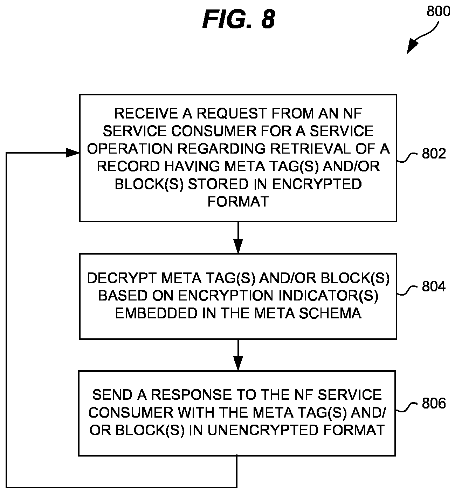

FIG. 8 is a flow chart illustrating a method 800 of performing a data repository service in an illustrative embodiment. In this method, data repository NF 500 acts as an NF service producer 304 for a data repository service where an NF service consumer 302 retrieves data from data repository NF 500. Data management controller 504 of data repository NF 500 receives a request from the same or another NF service consumer 302 for a service operation regarding retrieval of a record 510 having the meta tag(s) 610 and/or block(s) 604 stored in encrypted format (step 802), such as through network interface component 502. For example, data management controller 504 may receive a request to retrieve the record 510, to retrieve the meta 602 of the record 510, to retrieve a block 604 or all blocks 604 of the record 510, etc. In response to the request, data management controller 504 decrypts the meta tag(s) 610 and/or block(s) 604 of the record(s) 510 based on the encryption indicators 522 embedded in the meta schema 520 (step 804). Data management controller 504 then sends a response to the NF service consumer 302 containing the meta tag(s) 610 and/or block(s) 604 in unencrypted format (step 806), such as through network interface component 502.

Data repository NF 500 may repeat method 800 for the same or other NF service consumers 302.

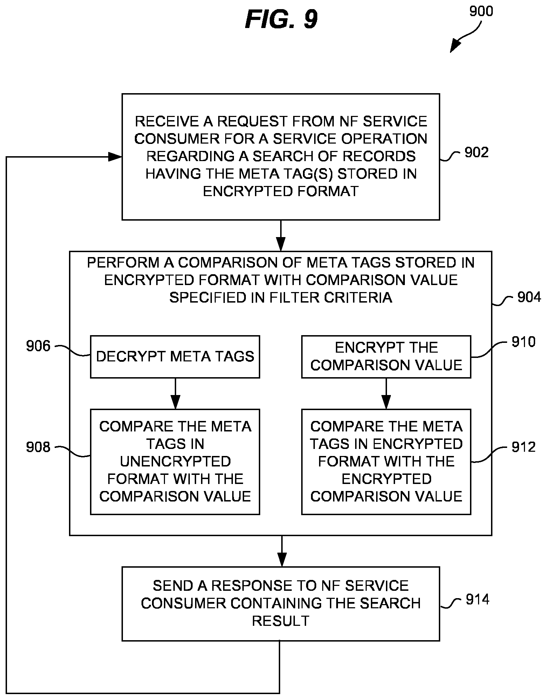

FIG. 9 is a flow chart illustrating a method 900 of performing a data repository service in an illustrative embodiment. In this method, data repository NF 500 acts as an NF service producer 304 for a data repository service where an NF service consumer 302 searches data stored in data repository NF 500. Data management controller 504 of data repository NF 500 receives a request from the same or another NF service consumer 302 for a service operation regarding a search of records 510 having meta tag(s) 610 stored in encrypted format (step 902). The request from the NF service consumer 302 includes filter criteria for searching the records 510, and the filter criteria includes or specifies a comparison value (or multiple comparison values). For the search, data management controller 504 performs a comparison of meta tags 610 stored in encrypted format with the comparison value (step 904). In one embodiment, data management controller 504 may decrypt meta tags 610 indicated in the filter criteria (step 906), and compare the meta tags 610 in unencrypted format with the comparison value (step 908). Alternatively, data management controller 504 may encrypt the comparison value (step 910), and compare the meta tags 610 in encrypted format with the encrypted comparison value (step 912). Data management controller 504 then sends a response to the NF service consumer 302 containing the search result (step 914), i.e., containing the record references matching the filter criteria.

Data repository NF 500 may repeat method 900 for the same or other NF service consumers 302.

One technical benefit of the encryption service described above is a data repository NF 500 is responsible for implementing the encryption/decryption of the relevant meta 602 and/or blocks 604 of records 510 stored in data repository NF 500 based on the encryption indicators 522 in the meta schema 520. Thus, encryption keys remain local to the data repository NF 500, and do not need to be shared between data repository NF 500 and NF service consumers 302. The encryption service within a data repository NF 500 may be used in parallel with encryption applied by NF service consumers 302. For example, NF service consumers 302 may perform block encryption/decryption and use the encryption service to protect meta tags 610. Another technical benefit is encryption can be applied on per-need basis for specific meta tags 610 and/or blocks 604 based on the encryption indicators 522 in the meta schema 520. Another technical benefit is meta tags 610 may be stored in encrypted format even when data repository NF 500 needs to process in nonencrypted format in order to perform searches, which improves security.

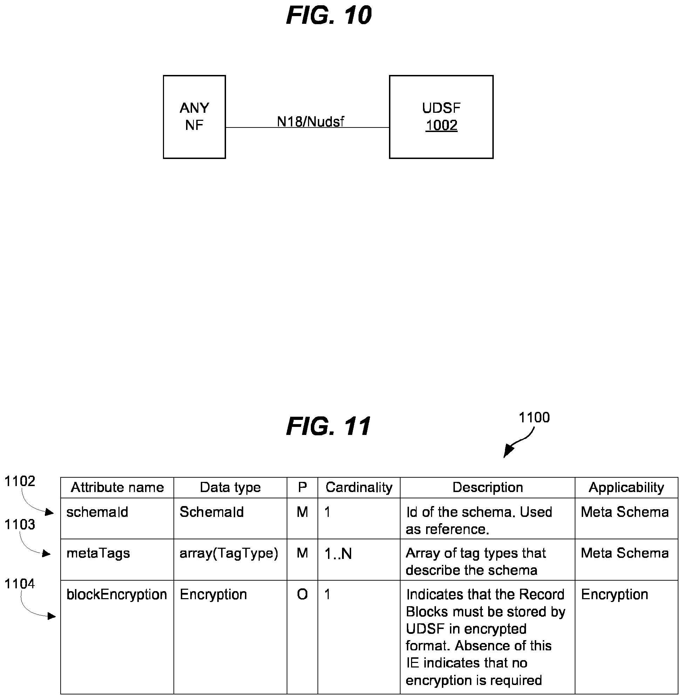

In one embodiment, data repository NF 500 may comprise or may be implemented in a UDSF. FIG. 10 illustrates a data storage architecture with a UDSF 1002. UDSF 1002 is an NF configured to provide a UDSF data repository service (e.g., Nudsf_DataRepository Service) as described in 3GPP TS 29.598 (v17.5 0). UDSF 1002 acts as an NF service producer 304, and provides the UDSF data repository service to an NF service consumer 302. The UDSF data repository service allows NF service consumers 302 to retrieve, create, update, and delete data stored in UDSF 1002. Any NF may use UDSF 1002 to store unstructured data (i.e., data for which the structure is not defined in 3GPP specifications). UDSF 1002 belongs to the same PLMN where the NF service consumer 302 is located. NFs may share a UDSF 1002 for storing their respective unstructured data or may each have their own UDSF 1002.

To provide an encryption service in UDSF 1002, for example, the data structure of the UDSF data repository service may be extended to include an encryption indicator 522 (i.e., block encryption indicator) that indicates whether UDSF 1002 is to encrypt blocks 604 of a record 510. The data structure of the UDSF data repository service may be extended to include an encryption indicator 522 (i.e., tag encryption indicator) that indicates whether UDSF 1002 is to encrypt one or more meta tags 610 (i.e., tag values 614) of a record 510.

The data model supported by the UDSF data repository service (i.e., Nudsf_DataRepository service) Application Programming Interface (API) includes multiple structured data types (see, for example, section 6.1.6.2 of 3GPP TS 29.598). One of the data types is the "MetaSchema" data type (see, for example, section 6.1.6.2.15 of 3GPP TS 29.598) that describes the meta schema 520. FIG. 11 illustrates the "MetaSchema" data type 1100 in an illustrative embodiment. The "MetaSchema" data type 1100 includes the following mandatory attributes or Information Elements (IE): a "schemaId" attribute 1102, and a "metaTags" attribute 1103. The "schemaId" attribute 1102 indicates the meta schema 520, and the "metaTags" attribute 1103 is an array of tag types that describes the meta schema 520. In one embodiment, the "MetaSchema" data type 1100 is extended to include an optional encryption indicator 522, which comprises a block encryption indicator 1104 (also referred to as attribute or IE). The block encryption indicator 1104 (i.e., "blockEncryption") indicates that encryption is directed, instructed, or required for the blocks 604 of records 510 stored by UDSF 1002. Absence of this indicator indicates that no encryption is required. Although the name "blockEncryption" is illustrated for the block encryption indicator 1104 in FIG. 11, other attribute names may be used.

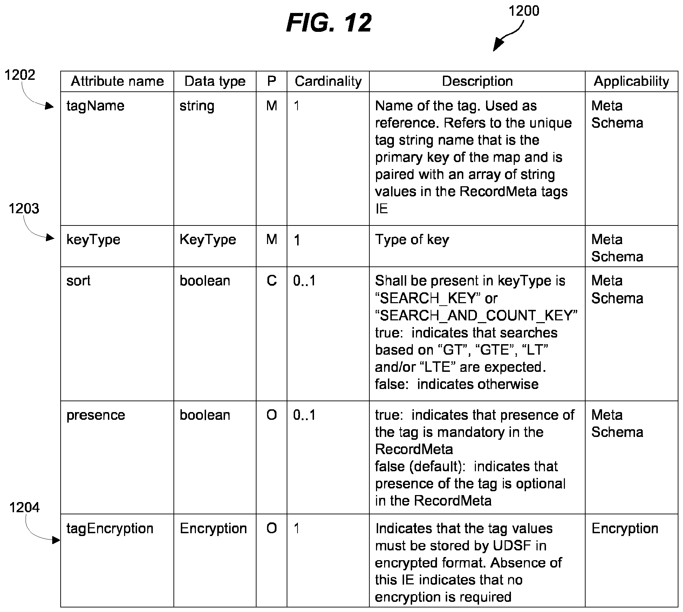

Another of the data types is the "TagType" data type (see, for example, section 6.1.6.2.16 of 3GPP TS 29.598). FIG. 12 illustrates the "TagType" data type 1200 in an illustrative embodiment. The "TagType" data type 1200 includes the following mandatory attributes or IEs: a "tagName" attribute 1202, and a "keyType" attribute 1203. The "tagName" attribute 1202 indicates the tag name 612 of the meta tag 610. The "keyType" attribute 1203 is the type of key. In one embodiment, the "TagType" data type 1200 is extended to include an optional encryption indicator 522, which comprises a tag encryption indicator 1204 (also referred to as attribute or IE). The tag encryption indicator 1204 (i.e., "tagEncryption") indicates that encryption is directed, instructed, or required for the tag values 614 mapped to the tag name 612 as stored by UDSF 1002. Absence of this indicator indicates that no encryption is required. Although the name "tagEncryption" is illustrated for the tag encryption indicator 1204 in FIG. 12, other attribute names may be used.

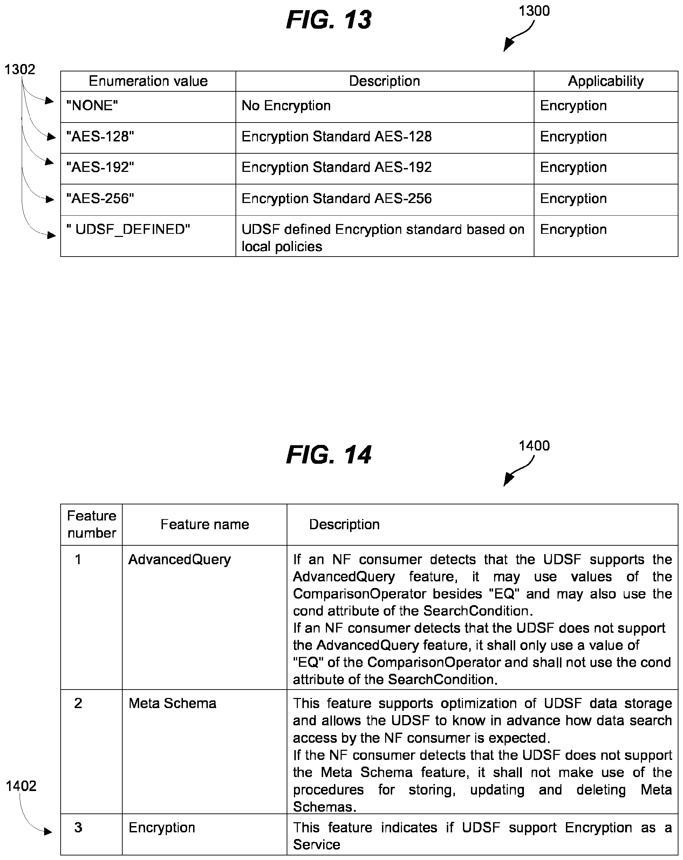

The data model supported by the UDSF data repository service API also includes simple data types and enumerations (see, for example, section 6.1.6.3 of 3GPP TS 29.598). The block encryption indicator 1104 and the tag encryption indicator 1204 each refer to an encryption data type. The data model may be extended to include a new encryption enumeration that indicates encryption methods (i.e., referring to the target or supported key algorithms and the associated key sizes) for records 510 stored in UDSF 1002. FIG. 13 illustrates an encryption enumeration 1300 in an illustrative embodiment. Encryption enumeration 1300 (which may be labeled section 6.1.6.3-x in 3GPP TS 29.598) indicates a plurality of enumeration values 1302 as follows: no encryption (or "NULL"), AES-128, AES-192, AES-256, and UDSF_DEFINED. The AES-128 enumeration value indicates that the encryption method is based on the AES-128 encryption standard, the AES-192 enumeration value indicates that the encryption method is based on the AES-192 encryption standard, and the AES-256 enumeration value indicates that the encryption method is based on the AES-256 encryption standard. The UDSF_DEFINED enumeration value indicates that the encryption method is based on a local policy of UDSF 1002. FIG. 13 illustrates a non-exhaustive list of possible encryption enumeration values, and others may be defined or standardized.

According to the 3GPP, for any API that defines resources, suitable resources associated to or representing the NF service consumer 302 are identified in each API to support the negotiation of the applicable optional features between the NF service consumer 302 and the NF service producer 304 for the resource (see 3GPP TS 29.500, section 6.6). The resource for an API contains a "supportedFeatures" attribute of the "SupportedFeatures" data type defined in 3GPP TS 29.571 (see section 5.2.4.1). In one embodiment, UDSF 1002 may expose the encryption service as part of the UDSF data repository service, such as by registering its encryption capability in NRF 226. NRF 226 in turn allows for registration of UDSF 1002 with additional encryption capability, and allows for discovery of UDSF 1002 by an NF service consumer 302 supporting encryption capability. An NF service consumer 302 may therefore select a UDSF 1002 based on the new encryption service supported by UDSF 1002 via feature negotiation or NRF discovery. This functionality may be defined as a new UDSF feature for the UDSF data repository service. FIG. 14 illustrates a supported features data type 1400 in an illustrative embodiment. The supported features data type 1400 includes an encryption feature indicator 1402 that indicates a UDSF 1002 supports encryption as a service.

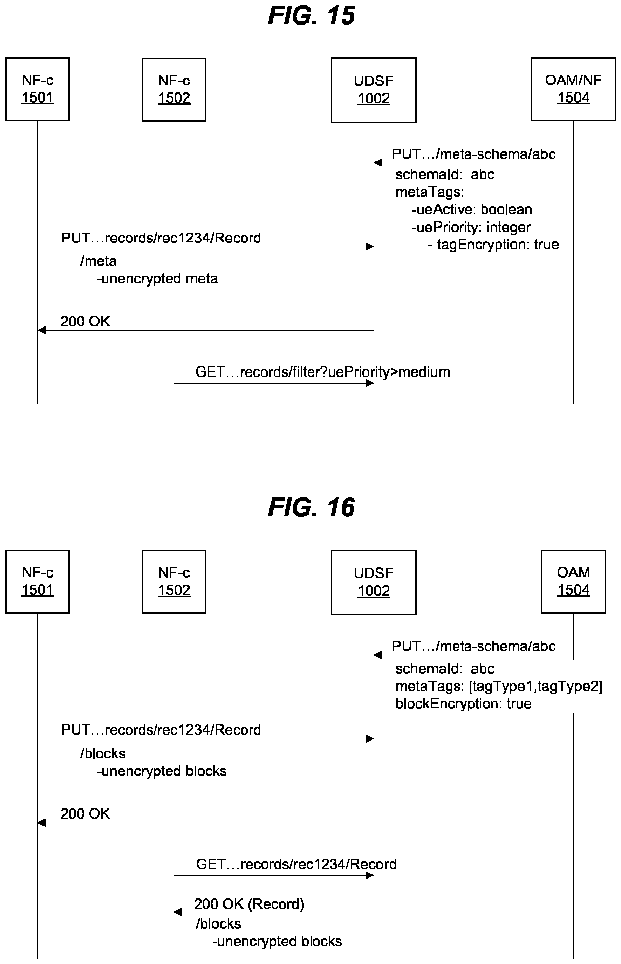

FIGS. 15-16 are message diagrams illustrating the UDSF data repository service in illustrative embodiments. In FIG. 15, UDSF 1002 receives a meta schema 520 for records 510. For example, UDSF 1002 may receive an HTTP PUT from another NF 1504 (e.g., an Operations, Administration, and Maintenance (OAM) NF, an NF service consumer, etc.) to create or update a meta schema 520 for the UDSF data repository service, and stores the meta schema 520 in local memory 532. In this example, the meta schema 520 includes a tag encryption indicator 1204 indicating that meta tags 610 with the tag name "uePriority" in records 510 be encrypted by UDSF 1002.

UDSF 1002 receives a request from an NF service consumer (NF-c 1501) for a service operation regarding storage of a record 510. For example, UDSF 1002 may receive an HTTP PUT from NF-c 1501 with a record resource to create or update the record 510, to modify the meta 602 of a record 510, etc. The request body from the NF-c 1501 includes meta 602 of the record 510 in unencrypted format. UDSF 1002 processes the meta schema 520 for the record 510 to determine whether meta 602 and/or blocks 604 are to be encrypted for storage. Based on the meta schema 520, UDSF 1002 applies encryption to the meta tag 610 with the tag name "uePriority" based on the tag encryption indicator 1204 embedded in the meta schema 520. UDSF 1002 may leave other data of record 510 unencrypted (i.e., other meta tags 610 and blocks 604). UDSF 1002 then stores the record 510 with the meta tag 610 having the tag name "uePriority" in the encrypted format according to the meta schema 520. UDSF 1002 also sends a response to NF-c 1501 with a status code 200 OK for the prior request.

Subsequently, UDSF 1002 receives a request from the same or another NF service consumer (NF-c 1502) for a service operation regarding a search of records 510 containing certain meta tags 610 (i.e., tag name "uePriority") stored in encrypted format. For example, UDSF 1002 may receive an HTTP GET from NF-c 1502 requesting a search of records 510. In the example in FIG. 15, the request includes filter criteria to search for meta tags 610 having the tag name "uePriority", and specifies a comparison value of "medium". UDSF 1002 may decrypt meta tags 610 having the tag name "uePriority", and compare the meta tags 610 in unencrypted format with the comparison value "medium". Alternatively, UDSF 1002 may encrypt the comparison value "medium", and compare the meta tags 610 in encrypted format with the encrypted comparison value. UDSF 1002 may then send a response to NF-c 1502 containing the search results (not shown).

In FIG. 16, UDSF 1002 receives a meta schema 520 for records 510. For example, UDSF 1002 may receive an HTTP PUT from another NF 1504 (e.g., an OAM NF, an NF service consumer, etc.) that indicates the meta schema 520 for records 510, and stores the meta schema 520 in local memory 532. In this example, the meta schema 520 includes a block encryption indicator 1104 indicating that blocks 604 of records 510 are to be encrypted by UDSF 1002.

UDSF 1002 receives a request from an NF service consumer (NF-c 1501) for a service operation regarding storage of a record 510. For example, UDSF 1002 may receive an HTTP PUT from NF-c 1501 with a record resource to create or update the record 510, to create or update a block of record 510, etc. The request body from the NF-c 1501 includes one or more blocks 604 of the record 510 in unencrypted format. UDSF 1002 processes the meta schema 520 for the record 510 to determine whether meta 602 and/or blocks 604 are to be encrypted for storage. Based on the meta schema 520, UDSF 1002 applies encryption to the blocks 604 based on the block encryption indicator 1104 embedded in the meta schema 520. UDSF 1002 may leave the meta 602 of record 510 unencrypted (i.e., meta tags 610). UDSF 1002 then stores the record 510 with the blocks 604 in encrypted format according to the meta schema 520. UDSF 1002 also sends a response to NF-c 1501 with a status code 200 OK for the prior request.

Subsequently, UDSF 1002 receives a request from the same or another NF service consumer (NF-c 1502) for a service operation regarding retrieval of a record 510, which has blocks 604 stored in encrypted format. For example, UDSF 1002 may receive an HTTP GET from NF-c 1502 requesting retrieval of the record 510, retrieval of a block 604 or all blocks 604 of the record 510, etc., as indicated by a "recordId". UDSF 1002 locates the requested record 510, and decrypts the blocks 604 in the requested record 510. UDSF 1002 then sends a response to NF-c 1502 with the requested record 510 or the requested blocks 604 of the record 510 in unencrypted format (e.g., 200 OK).

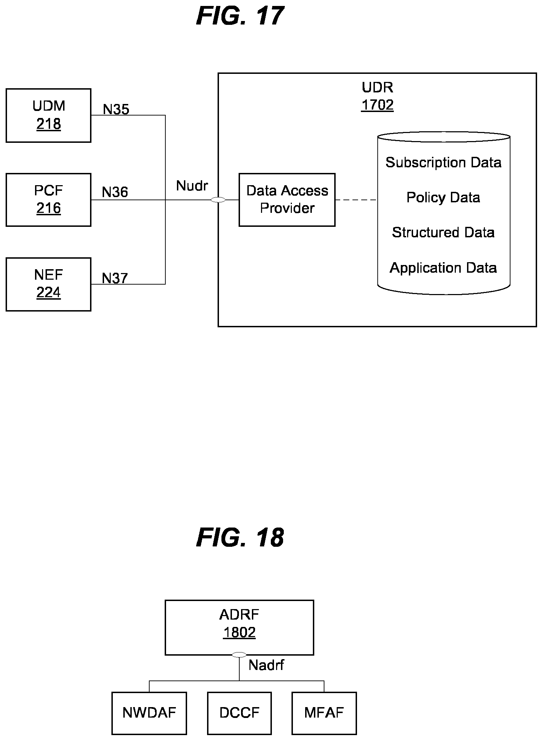

In one embodiment, data repository NF 500 may comprise or may be implemented in a UDR. FIG. 17 illustrates a data storage architecture with a UDR 1702. UDR 1702 is an NF configured to provide a UDR data repository service (e.g., Nudr_DataRepository Service) as described in 3GPP TS 29.504 (v17.6 0). UDR 1702 supports the following functionalities: storage and retrieval of subscription data, storage and retrieval of policy data, storage and retrieval of structured data for exposure, and storage and retrieval of application data. UDR 1702 acts as an NF service producer 304, and provides the data repository service to an NF service consumer 302. The NF service consumers 302 of UDR 1702 are the UDM 218, PCF 216, and NEF 224, although other NFs may be considered in the future.

In one embodiment, data repository NF 500 may comprise or may be implemented in an ADRF. FIG. 18 illustrates a data storage architecture with an ADRF 1802. ADRF 1802 is an NF configured to provide an ADRF data repository service (e.g., Nadrf DataRepository Service) as described in 3GPP TS 29.575 (v17.0 0). ADRF 1802 supports the following functionalities: store data or analytics, retrieve data or analytics, and delete data or analytics. ADRF 1802 acts as an NF service producer 304, and provides the data repository service to an NF service consumer 302. The NF service consumers 302 of ADRF 1802 are a Data Collection Coordination Function (DCCF), a Network Data Analytics Function (NWDAF), and a Messaging Framework Adaptor Function (MFAF), although other NFs may be considered in the future.

Any of the various elements or modules shown in the figures or described herein may be implemented as hardware, software, firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, an element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

As used in this application, the term "circuitry" may refer to one or more or all of the following:
(a) hardware-only circuit implementations (such as implementations in only analog and/or digital circuitry);
(b) combinations of hardware circuits and software, such as (as applicable):
   (i) a combination of analog and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although specific embodiments were described herein, the scope of the disclosure is not limited to those specific embodiments. The scope of the disclosure is defined by the following claims.

## Claims

1. An apparatus for a data repository Network Function (NF) of a 5G core network, comprising means for:
receiving a request from an NF service consumer for a service operation regarding storage of a record, and containing meta and/or one or more blocks of the record;
applying encryption to one or more meta tags of the meta and/or to the blocks of the record based on one or more encryption indicators embedded in a meta schema defined for the meta; and
storing the record with the one or more meta tags and/or the blocks in encrypted format according to the meta schema.

2. The apparatus of claim 1, further comprising means for:
receiving another request from the same or another NF service consumer for a service operation regarding retrieval of the record having the one or more meta tags and/or the blocks stored in encrypted format;
decrypting the one or more meta tags and/or the blocks of the record based on the encryption indicators embedded in the meta schema; and
sending a response to the NF service consumer with the one or more meta tags and/or the blocks in unencrypted format.

3. The apparatus of claim 1, further comprising means for:
receiving another request from the same or another NF service consumer for a service operation regarding a search of records having the one or more meta tags stored in encrypted format;
performing a comparison of the one or more meta tags stored in encrypted format with a comparison value specified in filter criteria; and
sending a response to the NF service consumer containing a search result.

4. The apparatus of claim 3, further comprising means for:
decrypting the one or more meta tags indicated in the filter criteria; and
comparing the one or more meta tags in unencrypted format with the comparison value.

5. The apparatus of claim 3, further comprising means for:
encrypting the comparison value; and
comparing the one or more meta tags in encrypted format with the encrypted comparison value.

6. The apparatus of claim 1, wherein:
the meta schema includes a block encryption indicator of the encryption indicators indicating that the blocks of the record are stored in encrypted format.

7. The apparatus of claim 6, wherein:
a meta schema data type of the meta schema includes the block encryption indicator.

8. The apparatus of claim 1, wherein:
the meta schema includes a tag encryption indicator of the encryption indicators indicating that tag values of a meta tag of the record are stored in encrypted format.

9. The apparatus of claim 8, wherein:
a tag type data type of the meta schema includes the tag encryption indicator.

10. The apparatus of claim 1, wherein:
the encryption indicators refer to an encryption enumeration that indicates encryption methods for records stored in the data repository NF.

11. The apparatus of claim 1, wherein:
a supported features data type includes an encryption feature indicator indicating that the data repository NF supports encryption as a service.

12. The apparatus of claim 1, further comprising means for:
register an encryption capability in an NF Repository Function (NRF).

13. The apparatus of claim 1, wherein:
the data repository NF is implemented in an Unstructured Data Storage Function (UDSF).

14. A method of performing a data repository service in a 5G core network, the method comprising:
receiving a request from a Network Function (NF) service consumer for a service operation regarding storage of a record, and containing meta and/or one or more blocks of the record;
applying encryption to one or more meta tags of the meta and/or to the blocks of the record based on one or more encryption indicators embedded in a meta schema defined for the meta; and
storing the record with the one or more meta tags and/or the blocks in encrypted format according to the meta schema.

15. A computer program comprising instructions for causing an apparatus for a data repository Network Function (NF) of a 5G core network to perform at least the following:
receiving a request from an NF service consumer for a service operation regarding storage of a record, and containing meta and/or one or more blocks of the record;
applying encryption to one or more meta tags of the meta and/or to the blocks of the record based on one or more encryption indicators embedded in a meta schema defined for the meta; and
storing the record with the one or more meta tags and/or the blocks in encrypted format according to the meta schema.

## Patentansprüche

1. Vorrichtung für eine Datenrepositoriumsnetzwerkfunktion (NF) eines 5G-Kernnetzwerks, die Mittel für Folgendes umfasst:
Empfangen einer Anforderung einer Dienstoperation, die sich auf eine Speicherung eines Datensatzes bezieht und Meta und/oder einen oder mehrere Blöcke des Datensatzes enthält, von einem NF-Dienstverbraucher;
Anwenden einer Verschlüsselung auf ein oder mehrere Metatags der Meta und/oder auf die Blöcke des Datensatzes auf Basis von einem oder mehreren Verschlüsselungsindikatoren, die in ein Metaschema eingebettet sind, das für die Meta definiert ist; und
Speichern des Datensatzes mit dem einen oder den mehreren Metatags und/oder den Blöcken in einem verschlüsselten Format gemäß dem Metaschema.

2. Vorrichtung nach Anspruch 1, die ferner Mittel für Folgendes umfasst:
Empfangen einer weiteren Anforderung einer Dienstoperation, die sich auf das Abrufen des Datensatzes bezieht, der das eine oder die mehreren Metatags und oder die in einem verschlüsselten Format gespeicherten Blöcke aufweist, vom selben oder einem anderen NF-Dienstverbraucher;
Verschlüsseln des einen oder der mehreren Metatags und/oder der Blöcke des Datensatzes auf Basis der Verschlüsselungsindikatoren, die in das Metaschema eingebettet sind; und
Senden einer Antwort an den NF-Dienstverbraucher mit dem einen oder den mehreren Metatags und/oder den Blöcken in einem unverschlüsselten Format.

3. Vorrichtung nach Anspruch 1, die ferner Mittel für Folgendes umfasst:
Empfangen einer weiteren Anforderung einer Dienstoperation, die sich auf eine Suche nach Datensätzen bezieht, die das eine oder die mehreren in einem verschlüsselten Format gespeicherten Metatags aufweisen, vom selben oder einem anderen NF-Dienstverbraucher;
Durchführen eines Vergleichs des einen oder der mehreren in einem verschlüsselten Format gespeicherten Metatags mit einem Vergleichswert, der in Filterkriterien spezifiziert ist; und
Senden einer Antwort an den NF-Dienstverbraucher, die ein Suchergebnis enthält.

4. Vorrichtung nach Anspruch 3, die ferner Mittel für Folgendes umfasst:
Entschlüsseln des einen oder der mehreren Metatags, die in den Filterkriterien angezeigt werden; und
Vergleichen des einen oder der mehreren Metatags in einem unverschlüsselten Format mit dem Vergleichswert.

5. Vorrichtung nach Anspruch 3, die ferner Mittel für Folgendes umfasst:
Verschlüsseln des Vergleichswertes; und
Vergleichen des einen oder der mehreren Metatags in einem verschlüsselten Format mit dem verschlüsselten Vergleichswert.

6. Vorrichtung nach Anspruch 1, wobei:
das Metaschema einen Blockverschlüsselungsindikator der Verschlüsselungsindikatoren beinhaltet, der anzeigt, dass die Blöcke des Datensatzes in einem verschlüsselten Format gespeichert sind.

7. Vorrichtung nach Anspruch 6, wobei:
ein Metaschemadatentyp des Metaschemas den Blockverschlüsselungsindikator beinhaltet.

8. Vorrichtung nach Anspruch 1, wobei:
das Metaschema einen Tagverschlüsselungsindikator der Verschlüsselungsindikatoren beinhaltet, der anzeigt, dass Tagwerte eines Metatags des Datensatzes in einem verschlüsselten Format gespeichert sind.

9. Vorrichtung nach Anspruch 8, wobei:
ein Tagtypdatentyp des Metaschemas den Tagverschlüsselungsindikator beinhaltet.

10. Vorrichtung nach Anspruch 1, wobei:
die Verschlüsselungsindikatoren sich auf eine Verschlüsselungsnummerierung beziehen, die Verschlüsselungsverfahren für Datensätze anzeigt, die in der Datenrepositoriums-NF gespeichert sind.

11. Vorrichtung nach Anspruch 1, wobei:
ein unterstützter Merkmalsdatentyp einen Verschlüsselungsmerkmalsindikator beinhaltet, der anzeigt, dass die Datenrepositoriums-NF eine Verschlüsselung als einen Dienst unterstützt.

12. Vorrichtung nach Anspruch 1, die ferner Mittel für Folgendes umfasst:
Registrieren einer Verschlüsselungsfähigkeit in einer NF-Repositoriumsfunktion (NRF).

13. Vorrichtung nach Anspruch 1, wobei:
die Datenrepositoriums-NF in einer nicht strukturierten Datenspeicherfunktion (UDSF) implementiert wird.

14. Verfahren zum Durchführen eines Datenrepositoriumsdienstes in einem 5G-Kernnetzwerk, wobei das Verfahren Folgendes umfasst:
Empfangen einer Anforderung einer Dienstoperation, die sich auf eine Speicherung eines Datensatzes bezieht und Meta und/oder einen oder mehrere Blöcke des Datensatzes enthält, von einem Netzwerkfunktions(NF)-Dienstverbraucher;
Anwenden einer Verschlüsselung auf ein oder mehrere Metatags der Meta und/oder auf die Blöcke des Datensatzes auf Basis von einem oder mehreren Verschlüsselungsindikatoren, die in ein Metaschema eingebettet sind, das für die Meta definiert ist; und
Speichern des Datensatzes mit dem einen oder den mehreren Metatags und/oder den Blöcken in einem verschlüsselten Format gemäß dem Metaschema.

15. Computerprogramm, das Anweisungen zum Veranlassen einer Vorrichtung für eine Datenrepositoriumsnetzwerkfunktion (NF) eines 5G-Kernnetzwerks, mindestens Folgendes durchzuführen, umfasst:
Empfangen einer Anforderung einer Dienstoperation, die sich auf eine Speicherung eines Datensatzes bezieht und Meta und/oder einen oder mehrere Blöcke des Datensatzes enthält, von einem NF-Dienstverbraucher;
Anwenden einer Verschlüsselung auf ein oder mehrere Metatags der Meta und/oder auf die Blöcke des Datensatzes auf Basis von einem oder mehreren Verschlüsselungsindikatoren, die in ein Metaschema eingebettet sind, das für die Meta definiert ist; und
Speichern des Datensatzes mit dem einen oder den mehreren Metatags und/oder den Blöcken in einem verschlüsselten Format gemäß dem Metaschema.

## Revendications

1. Appareil pour une fonction de réseau (NF) de référentiel de données d'un réseau central 5G, comprenant des moyens pour :
recevoir d'un consommateur de service NF une demande d'opération de service concernant le stockage d'un enregistrement et contenant un méta et/ou un ou plusieurs blocs de l'enregistrement ;
appliquer un chiffrement à une ou plusieurs balises méta du méta et/ou aux blocs de l'enregistrement sur la base d'un ou plusieurs indicateurs de chiffrement intégrés dans un méta-schéma défini pour le méta ; et
stocker l'enregistrement avec les une ou plusieurs balises méta et/ou les blocs dans un format chiffré selon le méta-schéma.

2. Appareil selon la revendication 1, comprenant en outre des moyens pour :
recevoir du même ou d'un autre consommateur de service NF une autre demande d'opération de service concernant une récupération de l'enregistrement ayant les une ou plusieurs balises méta et/ou les blocs stockés dans un format chiffré ;
déchiffrer les une ou plusieurs balises méta et/ou les blocs de l'enregistrement sur la base des indicateurs de chiffrement intégrés dans le méta-schéma ; et
envoyer une réponse au consommateur de service NF avec les une ou plusieurs balises méta et/ou les blocs dans un format non chiffré.

3. Appareil selon la revendication 1, comprenant en outre des moyens pour :
recevoir du même ou d'un autre consommateur de service NF une autre demande d'opération de service concernant une recherche d'enregistrements ayant les une ou plusieurs balises méta stockées dans un format chiffré ;
effectuer une comparaison des une ou plusieurs balises méta stockées dans un format chiffré avec une valeur de comparaison spécifiée dans des critères de filtrage ; et
envoyer une réponse au consommateur de service NF contenant un résultat de recherche.

4. Appareil selon la revendication 3, comprenant en outre des moyens pour :
déchiffrer les une ou plusieurs balises méta indiquées dans les critères de filtrage ; et
comparer les une ou plusieurs balises méta dans un format non chiffré avec la valeur de comparaison.

5. Appareil selon la revendication 3, comprenant en outre des moyens pour :
chiffrer la valeur de comparaison ; et
comparer les une ou plusieurs balises méta dans un format chiffré avec la valeur de comparaison chiffrée.

6. Appareil selon la revendication 1, dans lequel :
le méta-schéma comporte un indicateur de chiffrement de bloc des indicateurs de chiffrement indiquant que les blocs de l'enregistrement sont stockées dans un format chiffré.

7. Appareil selon la revendication6, dans lequel :
un type de données de méta-schéma du méta-schéma comporte l'indicateur de chiffrement de bloc.

8. Appareil selon la revendication 1, dans lequel :
le méta-schéma comporte un indicateur de chiffrement de balise des indicateurs de chiffrement indiquant que des valeurs de balise d'une balise méta de l'enregistrement sont stockées dans un format chiffré.

9. Appareil selon la revendication 8, dans lequel :
un type de données de type de balise du méta-schéma comporte l'indicateur de chiffrement de balise.

10. Appareil selon la revendication 1, dans lequel :
les indicateurs de chiffrement font référence à une énumération de chiffrement qui indique des procédés de chiffrement pour des enregistrements stockés dans le référentiel de données NF.

11. Appareil selon la revendication 1, dans lequel :
un type de données de fonctionnalités prises en charge comporte un indicateur de fonctionnalité de chiffrement indiquant que le référentiel de données NF prend en charge le chiffrement en tant que service.

12. Appareil selon la revendication 1, comprenant en outre des moyens pour :
enregistrer une capacité de chiffrement dans une fonction de référentiel NF (NRF).

13. Appareil selon la revendication 1, dans lequel :
le référentiel de données NF est mis en œuvre dans une fonction de stockage de données non structurées (UDSF).

14. Procédé pour effectuer un service de référentiel de données dans un réseau central 5G, le procédé comprenant les étapes suivantes :
recevoir d'un consommateur de services de fonction réseau (NF) une demande d'opération de service concernant le stockage d'un enregistrement et contenant un méta et/ou un ou plusieurs blocs de l'enregistrement ;
appliquer un chiffrement à une ou plusieurs balises méta du méta et/ou aux blocs de l'enregistrement sur la base d'un ou plusieurs indicateurs de chiffrement intégrés dans un méta-schéma défini pour le méta ; et
stocker l'enregistrement avec les une ou plusieurs balises méta et/ou les blocs dans un format chiffré selon le méta-schéma.

15. Procédé informatique comprenant des instructions pour amener un appareil pour une fonction de réseau (NF) de référentiel de données d'un réseau central 5G à effectuer au moins ce qui suit :
recevoir d'un consommateur de service NF une demande d'opération de service concernant le stockage d'un enregistrement et contenant un méta et/ou un ou plusieurs blocs de l'enregistrement ;
appliquer un chiffrement à une ou plusieurs balises méta du méta et/ou aux blocs de l'enregistrement sur la base d'un ou plusieurs indicateurs de chiffrement intégrés dans un méta-schéma défini pour le méta ; et
stocker l'enregistrement avec les une ou plusieurs balises méta et/ou les blocs dans un format chiffré selon le méta-schéma.
